Europäisches Patentamt

European Patent Office

Office européen des brevets

(11) Veröffentlichungsnummer: **0 439 802 B1**

(12) **EUROPÄISCHE PATENTSCHRIFT**

(45) Veröffentlichungstag der Patentschrift: **20.07.94**

(51) Int. Cl.5: **G01B 11/02**

(21) Anmeldenummer: **90125040.7**

(22) Anmeldetag: **20.12.90**

(54) **Vorrichtung zum Messen der Position eines Filamentbündels.**

(30) Priorität: **31.01.90 DE 4002743**

(43) Veröffentlichungstag der Anmeldung:
**07.08.91 Patentblatt 91/32**

(45) Bekanntmachung des Hinweises auf die
Patenterteilung:
**20.07.94 Patentblatt 94/29**

(84) Benannte Vertragsstaaten:
**AT BE CH DE DK ES FR GB GR IT LI LU NL SE**

(56) Entgegenhaltungen:
**DE-A- 2 847 552**
**GB-A- 2 221 296**
**US-A- 3 659 950**

**PATENT ABSTRACTS OF JAPAN, Band 7, Nr.
60 (P-182)(1205), 12. März 1983; & JP-A-
57206806**

(73) Patentinhaber: **FRAUNHOFER-GESELLSCHAFT
ZUR FÖRDERUNG DER ANGEWANDTEN FOR-
SCHUNG E.V.
Leonrodstrasse 54
D-80636 München(DE)**

(72) Erfinder: **Hartrumpf, Matthias, Dipl.-Phys.
Binger Strasse 60
W-7500 Karlsruhe 21(DE)**

**Beschreibung**

Die Erfindung betrifft eine Vorrichtung zum Messen der Position eines Filamentbündels gem. dem Oberbegriff des Anspruchs 1. In der Praxis wird die Position durch Augenschein überprüft.

Bei Spinnmaschinen, die Kunststofffasern spinnen, kommen die heißen Fadenfilamente in einem Bündel aus der Spinndüse, werden auf einem Weg von etwa 2 - 6 m von einer Kühleinrichtung angeblasen und dann von einer Abzugseinrichtung abgezogen, anschließend verdrillt und aufgespult. Die Geschwindigkeit der Fäden beträgt einige m/sec. Da ein stationärer Spinnzustand angestrebt wird, ist man bestrebt, möglichst die Position und Änderung des Schwerpunkts des Filamentbündels am Ort der größten Auslenkung des Bündels aus der Senkrechten zu messen.

Bisher geschieht dies durch Beobachtung des Personals.

Aus der Zeitschrift "Melliand Textilberichte" 7/1987, S. 463-365, ist eine Einrichtung bekannt, die mit einer optischen Einrichtung Textilgewebe mißt, wobei die Fehler im Gewebe ermittelt werden sollen. Für die Vermessung der Positionen von Filamenten bzw. der Position eines Filamentbündels ist die Einrichtung jedoch nicht geeignet, da das gesamte durch den Textilfleck durchtretende Licht in eine Integrationskugel eintrifft und gemessen wird.

Aus dem US-Patent 3,659,950 ist eine Einrichtung bekannt, mit deren Hilfe ein Faden vermessen wird. Das Licht eines Lasers wird über Umlenkspiegel auf den Faden gerichtet und über eine im direkten Strahlengang angeordnete Detektor-Array-Anordnung empfangen und das Bild ausgewertet. Auch diese Anordnung ist zur Vermessung der Position eines Bündels von Filamenten nicht geeignet.

Aus der GB-A-2 221 296 ist eine Beobachtungseinrichtung für ein beschichtetes Kabel bekannt, wobei dieses am Beobachtungsort vorbei läuft. Die Dicke und Position des Kabels werden mittels Strahlung vermessen. Zur Vermessung eines Faserbündels ist diese Einrichtung nicht ausgelegt und nicht geeignet, da die Fasern dünn sind und entsprechend niedrige Signale liefern.

Aus der Patentanmeldung JP-A-57-206806 ist die Messung der Auslenkung eines Beleuchtungspunktes auf einer Oberfläche bekannt, wobei die Kamera bewegt wird, um über eine zweimalige Messung unter verschiedenen Winkeln von Kamera und Beleuchtungseinrichtung über eine Winkelbeziehung die Auslenkung zu messen. Auf einem zu beobachtenden Filamentbündel ist ein Beleuchtungspunkt dagegen nicht meßbar.

Aus der DE-A-28 47 552 ist es weiterhin bekannt, durch auf einem Koordinatentisch befindlichen Empfänger und/oder Lichtquelle über die veränderte Lagemessung bei Bewegung des Koordinatentisches oder des Meßobjektes Aussagen über den Durchmesser und die Lage des Meßobjektes zu machen. Die Positionsmessung von Filamentbündeln ist mit dieser Vorrichtung nicht möglich.

Aufgabe der Erfindung ist es, eine Vorrichtung zum Messen der Position eines Filamentbündels zu schaffen, die automatisch die Position des Filamentbündels bestimmbar macht.

Erfindungsgemäß geschieht dies mit einer Vorrichtung nach Anspruch 1. Vorteilhafte Ausgestaltungen der Vorrichtung sind in den abhängigen Ansprüchen angegeben.

Mit der erfindungsgemäßen Einrichtung ist es erstmals möglich, einen Abschnitt des Faserbündels auf einen Sensor abzubilden und damit die Positionen der einzelnen Fasern, bzw. den Schwerpunkt des Bündels messen zu können. Da die Fasern ca. 10μm dick sind, ergibt sich keine Abschattung einzelner Filamente, so daß tatsächlich die einzelnen Positionen bzw. der Schwerpunkt vermessen werden kann. Die Auslenkung aus der Senkrechten bzw. der Mitte des Fadens beträgt einige cm bis zu 20 cm je nach Stärke des Gebläses und dem Abstand zur Spinndüse.

Daß die Detektoreinrichtung unter einem Winkel zur Beleuchtungsrichtung angeordnet ist, hat den Vorteil, daß kein direktes Licht der Lichtquelle in die Detektoreinrichtung fällt. Der Winkel beträgt daher etwa zwischen 10 und 45°. Dies ist insbesondere deshalb notwendig, da das Signal der einzelnen Faser weniger als 1μ Watt beträgt, wohingegen die Lichtquelle ca. 150 Watt Leistung haben kann, so daß das Verhältnis etwa $1:10^8$ - $1:10^9$ beträgt. Deshalb ist die Beobachtung im Dunkelfeld notwendig. Die Detektoreinrichtung kann z.B. eine Fernsehkamera sein oder eine Matrix von Photodioden, oder auch eine positionsempfindliche Fotodiode (position sensitive photodiode) (PSD). In jedem Fall ist eine Optik, z.B. eine Sammellinse vor diesen Sensoren zu positionieren gem. Anspruch 2.

Gem. Anspruch 3 wird das an den Filamenten gestreute Licht vermessen. Die zusätzliche Vermessung der Intensität des auf den Sensor fallenden Lichtes, nach Anspruch 11 ermöglicht die Vermessung der Anzahl bzw. der Dicke der Filamente.

Der Winkel zwischen Beleuchtungsrichtung und Detektoreinrichtung gestattet ferner die zusätzliche Vermessung der Position(en) in Beleuchtungsrichtung, da aufgrund der Abbildung Positionsänderungen in Beleuchtungsrichtung als Höhenänderungen der Abbildung auf einem zweidimensionalen Sensor gem. Anspruch 5 detektiert werden können.

Weiterhin ist es vorteilhaft, die Lichtquelle gepulst zu betreiben oder das Licht durch ein geeignetes Lichtventil intermittierend zu betreiben. Dies ist vorteilhaft, da dann in bekannter Weise in einer elektronischen Schaltung das Umgebungslicht herausgefiltert werden kann.

Wird ein CCD-Array als Sensor gewählt, so kann aus den einzelnen detektierten Filamentpositionen die Breite des Bündels berechnet werden. Bei Verwendung einer PSD können die einzelnen Positionen nicht mehr aufgelöst werden. Eine Vermessung der Bündelbreite kann dann mittels eines Filters gem. den Ansprüchen 6 - 8 oder äquivalent dazu mit Hilfe einer nach Anspruch 10 modifizierten Beleuchtung erfolgen. Das Meßprinzip beruht auf der Vermessung des Positionsmittelwerts nach den Ansprüchen 1 - 4 und der zusätzlichen Vermessung, z.B. des quadratischen Mittelwerts. Dies erlaubt die Bestimmung der Varianz der Filamentposition in Anblasrichtung, aus der die Bündelbreite berechnet werden kann.

Erfolgt die Messung der Position des Filamentbündels gem. Anspruch 5 und 7 mit einem zweidimensionalen analogen Positionssensor (PSD) in x'-Richtung, so kann in y'-Richtung der Mittelwert $\overline{f(x')}$ vermessen werden. Aus beiden gemessenen Mittelwerten kann auf die Bündelbreite geschlossen werden.

Nach Anspruch 8 erhält man aus den Mittelwerten von $\overline{x'^2}$ und $\overline{x'}$ die Positionsvarianz, und damit die Positions-Standardabweichung des Bildes auf dem Detektor, aus der die Bündelbreite berechnet werden kann.

Anstelle des Filters nach den Ansprüchen 6 - 8 kann ein aus mehreren Polarisationsfiltern bestehendes Filter gem. Anspruch 10 vor dem Sensor angebracht werden. Dadurch kann eine zusätzliche Vermessung des Polarisationsgrades des an den Filamenten gestreuten Lichts erfolgen.

Ausführungsbeispiel

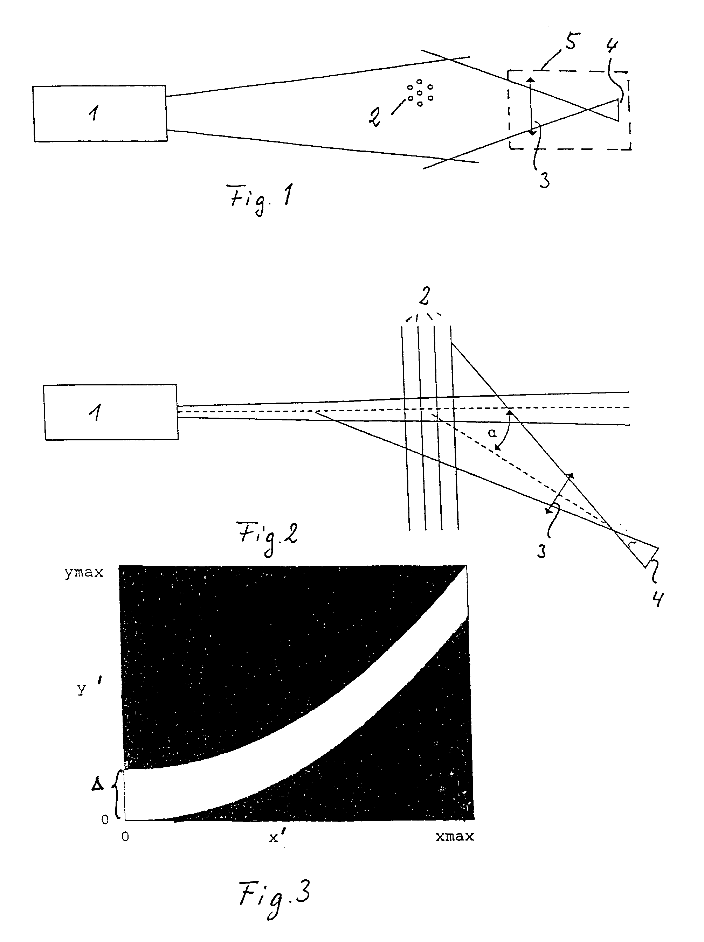

Fig. 1 zeigt die Aufsicht der erfindungsgemäßen Einrichtung, Fig. 2 die Seitenansicht, Fig. 3 ein besonders ausgestaltetes Filter.

Mit 1 ist die Lichtquelle bezeichnet, die das Faserbündel 2 intermittierend anstrahlt. Dieses Faserbündel kommt aus einer Spinndüse mit hoher Geschwindigkeit, wird dann von einer Kühleinrichtung, die ebenfalls nicht dargestellt ist, angeblasen und von einer Abzugseinrichtung abgezogen. Das Faserbündel gelangt dann in die Spinneinrichtung, wo die einzelnen Fasern miteinander versponnen werden, die Abzugs- und die Spinneinrichtung sind ebenfalls nicht dargestellt. Gegenüber der Lichtquelle ist eine Detektoreinrichtung 5 angeordnet. Sie besteht aus einer Optik 3 zur Abbildung des Filamentbündels 2 auf einen Sensor 4. Der Abstand Lichtquelle - Sensor beträgt etwa 0,2 - 2 m, das Filamentbündel wird sich etwa in der Mitte dieses Abstandes befinden. Der Detektoreinrichtung 5 ist eine - ebenfalls nicht dargestellte - Auswerteeinrichtung zur Auswertung der Meßsignale nachgeschaltet.

Vorteilhaft ist eine Aufstellung des Systems derart, daß die Beleuchtungsrichtung senkrecht zur Anblas- und Abzugseinrichtung gewählt wird und die Messung der Position parallel zur Anblasrichtung durchgeführt wird, d.h. die Koordinatenrichtung des Sensors, die zur Positionsmessung benutzt wird, ist parallel zur Anblasrichtung. Diese Koordinatenrichtung wird im Folgenden mit x' bezeichnet.

Da die Lichtquelle 1 wesentlich stärker als das Signal des Faserbündels ist, wobei das Signalverhältnis etwa $10^8:1$ beträgt, muß die Detektoreinrichtung außerhalb des Lichtweges der Lichtquelle 1 angeordnet sein.

In Fig. 2 ist eine vorteilhafte Einrichtung dargestellt, bei der die Detektoreinrichtung 5 gegenüber der horizontalen Ebene um einen Winkel $\alpha$ herausgeschwenkt ist, so daß das Licht der Lichtquelle 1 nicht direkt in die Detektoreinrichtung gelangen kann. Mit einer geeignet ausgestatteten Beleuchtungseinrichtung und bei Verwendung eines zweidimensionalen Sensor, kann dann, wie bereits dargelegt, auch die Auslenkung des Filamentbündels in Beleuchtungsrichtung vermessen werden.

Die Bestimmung der Breite des Bündels kann durch Auswertung der einzeln registrierten Filamentpositionen erfolgen. Voraussetzung dafür ist die Verwendung eines Sensors, der die Vermessung einzelner Filamentpositionen gestattet, wie z.B. CCD-Zeilen oder CCD-Matrix.

Bei Verwendung einer PSD können die einzelnen Filamente nicht mehr aufgelöst werden, eine Vermessung der mittleren Bündelbreite kann dann z.B. durch ein Filter mit parabolischer Öffnung erfolgen.

Zunächst wird das Prinzip der Vermessung der mittleren Position eines Filamentbündels in Anblasrichtung mittels einer PSD erläutert. Die Koordinatenrichtung der PSD, die zur mittleren Positionsvermessung benutzt wird, ist parallel zur Anblasrichtung und wird mit x' bezeichnet.

Bekanntlich führt ein Lichtfleck bzw. Lichtstreifen auf der PSD zu zwei Ausgangsströmen pro Koordinatenrichtung, die für die x'-Koordinate durch:

$$C_n := f * I * \frac{L - x'}{2 * L} \quad \text{und} \quad C_p := f * I * \frac{L + x'}{2 * L}$$

gegeben sind, wobei I die Intensität des Lichtfleckes bedeutet, $C_n$ bzw. $C_p$ die Ströme auf der negativen bzw. positiven Seite der PSD, 2 * L die Länge der aktiven Oberfläche der PSD, x' die Position des Lichtflecks auf derselben, und f ein konstanter Faktor.

Die Position x' kann unabhängig von der Intensität ermittelt werden:

$$x' := k * \frac{C_p - C_n}{C_p + C_n}$$

wobei k ebenfalls ein konstanter Faktor ist.

Fällt mehr als ein Lichtfleck auf die aktive Oberfläche, so überlagern sich die entsprechenden Ströme und die PSD mißt den optischen Schwerpunkt der Lichtflecken auf der aktiven Oberfläche.

$$\bar{x} := k * \frac{C_p - C_n}{C_p + C_n} \quad \text{bzw.} \quad \bar{x} := k * \frac{\sum_i I_i * x_i}{\sum_i I_i}$$

wobei der Index i den Wert des i-ten Lichtflecks angibt.

Auf diese Weise kann mit einer PSD der Schwerpunkt eines etwa radialsymetrischen, aus identischen Filamenten bestehenden Bündels ermittelt werden.

Die Vermessung von Bündeln mit davon abweichender Geometrie bzw. unterschiedlicher Filamente, ist mit einem reltiv kleinen Meßfehler behaftet, der sich durch Ausgleichsrechnungen minimieren läßt.

Wie oben dargestellt, kann mit einer PSD mit Hilfe der Anordnungen nach den Fig. 1-2 die gemittelte Position in Richtung der Lichtausbreitung bestimmt werden.

Alternativ dazu kann die Vermessung der Weite des Bündels mittels eines Filters nach den Ansprüchen 6 - 8, bzw. äquivalent dazu mit Hilfe einer Modifikation der Beleuchtung erfolgen. Im Folgenden wird die Vermessung der Bündelbreite nach Anspruch 7 und 8 erläutert.

Die Beleuchtung wird dabei derart modifiziert, daß der abgebildete Filamentabschnitt größer als die Höhe der PSD ist. Die Filamente sind in diesem Abschnitt nur schwach gekrümmt, so daß die Abbildung nahezu parallel zur y'-Richtung der PSD ist. Würde dann ein Filter, das nur in einem Bereich $\Delta$ um die Gerade y' = x' transparent ist, verwendet, so würde sowohl in x'- als auch in y'-Richtung die Vermessung der mittleren Position des Filamentbündels erfolgen. Durch Verwendung eines Filters mit einem durch y' = $x'^2 \pm \Delta$ gegebenen transparenten Bereich erfolgt in x'-Richtung (Anblasrichtung) wie bisher die Vermessung der mittleren Position, während in y'-Richtung der Mittelwert

$$\overline{y'} = k' \frac{\sum\limits_i y'_i}{\sum\limits_i I_i}$$

mit $y'_i$ der y' - Position der Abbildung des i - ten Filaments, die durch

$$y'_i = k' * x'^2_i$$

gegeben ist, wird $\overline{y'} = k' * \overline{x'^2}$.

Da die Normierung automatisch mit der PSD durchgeführt wird, kann man mit dem genannten Filter zusätzlich den quadratischen Mittelwert der Filamentpositionen messen, wobei die obengenannten Prämissen gelten. Aus dem Mittelwert und dem quadratischen Mittelwert kann dann die Standardabweichung der Bündelposition eines Filamentbündels berechnet werden. Mit der bekannten Verteilung der Filamente im Bündel kann daraus dann die Bündelbreite berechnet werden.

Mit Hilfe dieser einfachen Einrichtung kann nunmehr im Spinnprozeß die optimale Lage bzw. Fadenauslenkung ermittelt werden und der Spinnvorgang kontinuierlich auf einfache Weise überwacht werden.

Eine weitere Anwendung ist die Überwachung bei der Produktion dünner Drähte z.B. aus Kupfer oder aus Metall.

**Patentansprüche**

1. Vorrichtung zum Messen der Position eines Filamentbündels (2), das senkrecht aus einer Spinndüse heraustritt, zur Kühlung angeblasen und anschließend abgezogen wird,
   **dadurch gekennzeichnet,**
   daß in einer Ebene etwa senkrecht zur Abzugsrichtung, also in Richtung Spinndüse-Abzugseinrichtung vor dem Filamentbündel (2) eine Lichtquelle (1) angeordnet ist, deren Ausbreitungsrichtung etwa senkrecht zur Abzugsrichtung bzw. zum Filamentbündel verläuft,
   daß in Ausbreitungsrichtung des Lichts gesehen, hinter dem Filamentbündel (2) eine Detektoreinrichtung (5) in einem Winkel α gegen die Ebene angeordnet ist, in der die Ausbreitungsrichtung der Lichtquelle liegt und die senkrecht zur Abzugsrichtung ist, und der Winkel α kleiner als 90° und so groß gewählt ist, daß kein direktes Licht der Lichtquelle (1) auf die Detektoreinrichtung (5) trifft, und
   daß eine Auswerteeinrichtung zur Berechnung der Position des Filamentbündels (2) aus dem Signal der Detektoreinrichtung (5) vorgesehen ist.

2. Vorrichtung nach Anspruch 1,
   **dadurch gekennzeichnet,**
   daß in der Detektoreinrichtung (5) vor einem oder mehreren Sensoren (4) eine Optik (3) angeordnet ist.

3. Vorrichtung nach Anspruch 1 - 2,
   **dadurch gekennzeichnet,**
   daß das an den Filamenten gestreute Licht gemessen wird.

4. Vorrichtung nach Anspruch 1 - 3,
   **dadurch gekennzeichnet,**
   daß die Lichtquelle (1) gepulstes Licht emittiert, oder das Licht einer kontinuierlichen Lichtquelle über ein Lichtventil zerhackt wird.

**5.** Vorrichtung nach den Ansprüchen 1 - 4,
**dadurch gekennzeichnet,**
daß ein oder mehrere zweidimensionale Sensoren vorgesehen sind.

**6.** Vorrichtung nach den Ansprüchen 1 - 5,
**dadurch gekennzeichnet,**
daß vor der Detektoreinrichtung (5) ein Filter angeordnet ist.

**7.** Vorrichtung nach Anspruch 6,
**dadurch gekennzeichnet,**
daß ein zweidimensionales Filter mit den Koordinaten x', y' vorgesehen ist, das nur in einem Bereich y' = f(x') ± Δ transparent ist, wobei f(x') eine monotone Funktion von x' ist und Δ die halbe Öffnung des transparenten Bereichs bedeutet.

**8.** Vorrichtung nach Anspruch 7,
**dadurch gekennzeichnet,**
daß $f(x') = x'^2$ ist.

**9.** Vorrichtung nach den Ansprüchen 1 - 5,
**dadurch gekennzeichnet,**
daß die Lichtquelle (1) aus einem Lichtband besteht, dessen Höhe parallel zur Abzugsrichtung sich monoton mit der Breite etwa parallel zur Anblasrichtung ändert.

**10.** Vorrichtung nach Anspruch 6,
**dadurch gekennzeichnet,**
daß das Filter aus mehreren Polarisationsfiltern besteht und damit die zusätzliche Bestimmung des Polarisationsgrades des an den Filamenten gestreuten Lichtes gestattet.

**11.** Vorrichtung nach den Ansprüchen 1 - 9,
**dadurch gekennzeichnet,**
daß zusätzlich die Intensität des an den Filamenten gestreuten Lichtes gemessen wird, wodurch zusätzlich die Anzahl bzw. Dicke der Filamente gemessen werden kann.

**12.** Vorrichtung nach Anspruch 1 - 11,
**dadurch gekennzeichnet,**
daß der Strahlengang mit Spiegeln gefaltet wird.

**Claims**

**1.** Apparatus for measuring the position of a filament bundle (2) which emerges vertically from a spinning nozzle, is blown on to be cooled and is then drawn off, characterized in that a light source (1) is arranged in front of the filament bundle (2) in a plant approximately perpendicular to the draw-off direction, accordingly in the direction of the spinning nozzle draw-off mechanism, the direction of propagation being approximately perpendicular to the draw-off direction, i.e. to the filament bundle, in that a detector device (5) is arranged behind the filament bundle (2), as seen in the direction of propagation, at an angle α relative to the plane in which the direction of propagation lies and which is perpendicular to the draw-off direction, and the angle α is less than 90° and sufficiently large for no direct light from the light source (1) to impinge on the detector device (5), and in that a processing device is provided for computing the position of the filament bundle (2) from the signal from the detector device (5).

**2.** Apparatus according to claim 1, characterized in that optics (3) are arranged in the detector device (5) ahead of one or more sensors (4).

**3.** Apparatus according to claim 1 - 2, characterized in that scattered light from the filaments is measured.

**4.** Apparatus according to claim 1 - 3, characterized in that the light source (1) emits pulsed light or the light from a continuous light source is chopped by a light valve.

5. Apparatus according to claims 1 - 4, characterized in that one or more two-dimensional sensors are provided.

6. Apparatus according to claims 1 - 5, characterized in that a filter is arranged ahead of the detector device (5).

7. Apparatus according to claim 6, characterized in that a two-dimensional filter with coordinates x', y' is provided which is transparent only in a region y' = f(x')±Δ, where f(x') is a monotonic function of x' and Δ denotes the half aperture of the transparent region.

8. Apparatus according to claim 7, characterized in that $f(x') = x'^2$.

9. Apparatus according to claims 1 - 5, characterized in that the light source (1) consists of a strip of light whose height parallel to the draw-off direction changes monotonically with the width approximately parallel to the blowing direction.

10. Apparatus according to claim 6, characterized in that the filter consists of a plurality of polarisation filters and thus additionally allows determination of the degree of polarisation of the light scattered by the filaments.

11. Apparatus according to claims 1 - 9, characterized in that the intensity of the light scattered by the filaments is additionally measured, whereby the number or thickness of the filaments can also be measured.

12. Apparatus according to claims 1 - 11, characterized in that the beam path is folded by mirrors.

**Revendications**

1. Dispositif pour mesurer la position d'un faisceau (2) de filaments qui sort perpendiculairement d'une filière, est soumis à une insufflation pour le refroidir, puis est enlevé en le tirant,
**caractérisé** en ce qu'une source lumineuse (1), dont la direction de propagation est approximativement perpendiculaire à la direction d'enlèvement ou encore au faisceau de filaments, est disposée devant le faisceau (2) de filaments dans un plan approximativement perpendiculaire à la direction d'enlèvement, donc en direction de l'ensemble filière/dispositif d'enlèvement,
en ce que, vu dans la direction de propagation de la lumière, un dispositif détecteur (5) est disposé derrière le faisceau (2) de filaments, sous un angle α par rapport au plan dans lequel se trouve la direction de propagation de la source lumineuse et qui est perpendiculaire à la direction d'enlèvement, et l'angle α est inférieur à 90° et choisi suffisamment grand pour qu'il n'y ait pas de lumière directe de la source lumineuse (1) qui atteigne le dispositif détecteur (5),
et en ce qu'un dispositif évaluateur est prévu pour calculer la position du faisceau (2) de filaments à partir du signal du dispositif détecteur (5).

2. Dispositif selon la revendication 1, **caractérisé** en ce qu'une optique (3) est disposée devant un ou plusieurs capteurs (4) dans le dispositif détecteur (5).

3. Dispositif selon la revendication 1 ou 2, **caractérisé** en ce qu'on mesure la lumière dispersée sur les filaments.

4. Dispositif selon l'une des revendications 1 à 3, **caractérisé** en ce que la source lumineuse (1) émet de la lumière pulsée, ou bien la lumière d'une source lumineuse continue est hachée au moyen d'un obturateur de lumière.

5. Dispositif selon l'une des revendications 1 à 4, **caractérisé** en ce qu'il est prévu un ou plusieurs capteurs à deux dimensions.

6. Dispositif selon l'une des revendications 1 à 5, **caractérisé** en ce qu'un filtre est disposé devant le dispositif détecteur (5).

7. Dispositif selon la revendication 6, **caractérisé** en ce qu'il est prévu un filtre à deux dimensions de coordonnées x', y' qui n'est transparent que dans une plage y' = f(x') ± Δ, f(x') étant une fonction monotone de x' et Δ étant la demi-ouverture de la plage transparente.

8. Dispositif selon la revendication 7, **caractérisé** en ce que $f(x') = x'^2$.

9. Dispositif selon l'une des revendications 1 à 5, **caractérisé** en ce que la source lumineuse (1) est constituée d'une bande lumineuse, dont la hauteur parallèlement à la direction d'enlèvement varie de façon monotone avec la largeur environ parallèlement à la direction d'insufflation.

10. Dispositif selon la revendication 6, **caractérisé** en ce que le filtre est constitué de plusieurs filtres de polarisation et permet ainsi de déterminer en outre le degré de polarisation de la lumière dispersée sur les filaments.

11. Dispositif selon l'une des revendications 1 à 9, **caractérisé** en ce qu'on mesure en outre l'intensité de la lumière dispersée sur les filaments, de sorte qu'on peut en outre mesurer le nombre ou encore l'épaisseur des filaments.

12. Dispositif selon l'une des revendications 1 à 11, **caractérisé** en ce que la marche des rayons est déviée par des miroirs.

Fig. 1

Fig. 2

Fig. 3